# EUROPEAN PATENT APPLICATION

(11) **EP 4 104 741 A1**
(43) Date of publication of application: **21.12.2022**
(21) Application number: 21789520.0
(22) Date of filing: 20.05.2021
(51) Int. Cl.: A47L 23/22, B60S 3/04

(54) **MAT FOR CLEANING AND MOVING BODY CLEANING DEVICE**

(30) Priority: 16.04.2020 JP 2020073490
(71) Applicant: Nakajima, Kenichi, Ashikaga-shi Tochigi 326002 (JP)
(72) Inventor: NAKAJIMA, Rieko, Ashikaga-shi, Tochigi 326-0025 (JP); NAKAJIMA, Yasuhiro, Ashikaga-shi, Tochigi 326-0025 (JP); NAKAJIMA, Kenichi, Ashikaga-shi, Tochigi 326-0025 (JP)
(74) Representative: Wittmer, Maximilian
(86) International application number: PCT/JP2021/019218
(87) International publication number: WO 2021/210690

(57) **Abstract**

Disclosed is a mat for cleaning that removes extraneous matter adhering to a moving object, the mat for cleaning including: a mat part having a front surface facing the moving object and a back surface opposite to the front surface; a plurality of pump parts disposed on the front surface of the mat part, formed integrally with the mat part, and being deformable independently of each other; and a bottom member in contact with the back surface of the mat part and capable of being detached from the mat part, wherein the pump parts each include a pump chamber wall that protrudes from the front surface of the mat part and comes into contact with the moving object to receive a pressing force directly from the moving object, and a fluid passing portion provided in the pump chamber wall and allowing communication between an inside and an outside of the pump chamber wall, wherein the inside of the pump chamber wall opens on a side of the back surface and is closed by the bottom member, and wherein the pump chamber wall is deformed by receiving the pressing force from the moving object, and a fluid accommodated in the inside of the pump chamber wall passes through the fluid passing portion and is ejected to the moving object.

## Description

### Technical Field

The present disclosure relates to a mat for cleaning that cleans moving bodies such as vehicle tires and shoe soles, and a moving object cleaning device.

### Background Art

Mats for cleaning shoe soles and vehicle tire cleaning devices are known. Mats for cleaning shoe soles are used to remove dirt and sand adhering to shoe soles and are installed at entrances of buildings or rooms. Mats for cleaning shoe soles which are commonly used cannot reliably remove dirt and sand unless a pedestrian consciously rubs shoe soles against a mat for cleaning shoe soles. On the other hand, a shoe sole cleaning device that can remove dirt and sand adhering to shoe soles without a wearer consciously rubbing shoe soles against the mat for cleaning shoe soles is known (for example, Patent Literature 1).

In addition, vehicle tire cleaning devices are used at construction sites. At construction sites where soil is exposed, mud adheres to tires of a truck that carries cargo, and thus if the truck goes out on a road as it is, dirt will adhere to the road surface. In this case, after work, a worker at the construction site must clean the road surface. In such an environment, a vehicle tire cleaning device that prevents dirt from adhering to a road surface by removing mud adhering to a tire is used (for example, Patent Literature 2).

### Citation List

### Patent Literature

[Patent Literature 1] Japanese Unexamined Patent Publication No. 2015-8886
[Patent Literature 2] Japanese Unexamined Patent Publication No. 2016-32970

### Summary of Invention

### Technical Problem

The above mat for cleaning tends to inadequately clean shoe soles, each cleaning device tends to have a complicated structure, energy such as electric power needs to be supplied from the outside, and it is difficult to efficiently clean moving bodies such as shoe soles and tires while saving energy.

The present disclosure describes a mat for cleaning and a moving object cleaning device that have an excellent cleaning effect and a simple structure and can clean a moving object while saving energy.

### Solution to Problem

According to an aspect of the present disclosure, there is provided a mat for cleaning that removes extraneous matter adhering to a moving object, the mat for cleaning including: a mat part having a front surface facing the moving object and a back surface opposite to the front surface; a plurality of pump parts disposed on the front surface of the mat part, formed integrally with the mat part, and being deformable independently of each other; and a bottom member in contact with the back surface of the mat part and capable of being detached from the mat part, wherein the pump parts each include a pump chamber wall that protrudes from the front surface of the mat part and comes into contact with the moving object to receive a pressing force directly from the moving object, and a fluid passing portion provided in the pump chamber wall and allowing communication between an inside and an outside of the pump chamber wall, wherein the inside of the pump chamber wall opens on a side of the back surface and is closed by the bottom member, and wherein the pump chamber wall is deformed by receiving the pressing force from the moving object, and a fluid accommodated in the inside of the pump chamber wall passes through the fluid passing portion and is ejected to the moving object.

The pump chamber wall of the pump part protrudes from the front surface of the mat part. Therefore, when the moving object applies a pressing force to the mat part, the pump chamber wall receives the pressing force before the front surface of the mat part, and as a result, the pump chamber wall is deformed and crushed. When the pump chamber wall is crushed, the fluid accommodated in the inside is pushed out, passes through the fluid passing portion, and is ejected to the moving object that applies a pressing force. That is, in this mat for cleaning, it is possible to eject the fluid using the pressing force received from the moving object, and it is possible to efficiently clean the moving object while saving energy.

In some aspects, among the plurality of pump chamber walls, only the pump chamber wall that receives the pressing force directly from the moving object may be deformed.

In some aspects, the pump chamber wall may include a ceiling portion and a pressing force receiving portion that is provided to protrude from a part of the ceiling portion and in which a passage communicating with the fluid passing portion provided in the ceiling portion is formed, and the pump chamber wall may be deformed by receiving the pressing force from the moving object via the pressing force receiving portion, and the fluid accommodated in the inside of the pump chamber wall may pass through the fluid passing portion and be ejected to the moving body.

Some aspects may further include an extraneous matter removing part disposed between the plurality of pump parts to interfere with the moving object and to remove the extraneous matter. In addition to the ejection of the fluid, the extraneous matter can be removed more efficiently by the interference of the extraneous matter removing part.

In some aspects, the fluid may be air, and the air accommodated in the inside of the pump chamber wall may pass through the fluid passing portion and be ejected to the moving object due to the deformation of the pump chamber wall. When the air is used, the extraneous matter can be efficiently removed without making the surroundings wet or soiled.

Further, according to an aspect of the present disclosure, there is provided a moving object cleaning device including: the above mat for cleaning; an accommodation part configured to accommodate the mat for cleaning; and a liquid stored in the accommodation part as the fluid, wherein the liquid accommodated in the inside of the pump chamber wall passes through the fluid passing portion and is ejected to the moving object due to the deformation of the pump chamber wall.

Further, according to an aspect of the present disclosure, there is provided a mat for cleaning that removes extraneous matter adhering to a moving object, the mat for cleaning including: a mat part configured to receive a pressing force from a moving object; and a pump part disposed on a front surface of the mat part facing the moving object, wherein the pump part includes a pump chamber wall that protrudes from the mat part and a fluid passing portion provided in the pump chamber wall and allowing communication between an inside and an outside of the pump chamber wall, and wherein the pump chamber wall is deformed by receiving the pressing force from the moving object, and a fluid accommodated in the inside of the pump chamber wall passes through the fluid passing portion and is ejected to the moving object.

In some aspects, a plurality of pump parts may be disposed on the front surface of the mat part, and the inside of the pump chamber wall may be closed except for the fluid passing portion. When the inside of the pump chamber wall is closed except for the fluid passing portion when the pressing force is received from the moving object, the fluid in the inside is concentrated in the fluid passing portion and is efficiently ejected.

In some aspects, the mat part may have a back surface opposite to the front surface, a bottom member in contact with the back surface of the mat part may be further provided, and the inside of the pump chamber wall may be closed by the bottom member. By removing the bottom member, the inside of the pump chamber wall opens, and thus the inside can be easily cleaned.

In some embodiments, the pump chamber wall may include a ceiling portion and a pressing force receiving portion provided to protrude from a part of the ceiling portion, and the fluid passing portion may be provided on at least one of the ceiling portion and the pressing force receiving portion. The pressing force receiving portion protruding from the ceiling portion receives the pressing force from the moving object before the ceiling portion. Further, the pressing force receiving portion protrudes from a part of the ceiling portion, and thus the received pressing force can be easily transmitted locally to the ceiling portion. As a result, the pressing force works effectively around a part of the ceiling portion, and the pump chamber wall is easily deformed, and thus the ejection of the fluid from the fluid passing portion is promoted.

In some aspects, a plurality of pump parts may be disposed on the front surface of the mat part, and the plurality of pump parts may be disposed apart from each other. Since the plurality of pump parts are disposed apart from each other, the pump chamber walls are deformed independently of each other. That is, the pump chamber wall that has not received the pressing force from the moving object is not deformed, and thus it is possible to prevent the fluid from being ejected from the pump part at a position away from the moving object and it is possible to curb useless ejection of the fluid.

According to an aspect of the present disclosure, there is provided a moving object cleaning device including: the above mat for cleaning; an accommodation part configured to accommodate the mat for cleaning; and a liquid stored in the accommodation unit as the fluid, wherein the liquid accommodated in the inside of the pump chamber wall passes through the fluid passing portion and is ejected to the moving object due to the deformation of the pump chamber wall. Since the moving object cleaning device uses the liquid as the fluid, for example, it is possible to perform chemical solution cleaning. Further, since the liquid ejected from the pump chamber wall in response to the pressing force from the moving object is held in the accommodation part, it is possible to prevent leakage to the surroundings.

According to an aspect of the present disclosure, there is provided a mat for cleaning that removes extraneous matter adhering to a moving object by ejecting a fluid, the mat for cleaning including: a mat part having a front surface facing the moving object; a pump chamber wall protruding from the front surface, accommodating the fluid in an inside, and being elastically deformable; and a fluid passing portion which is provided on the pump chamber wall and through which the fluid in the inside passes and is ejected to an outside due to elastic deformation of the pump chamber wall and a fluid on the outside is sucked into the inside due to restoration of the pump chamber wall.

In some aspects, the pump chamber wall of the pump part protrudes from the mat part. Therefore, when the moving object applies a pressing force to the mat part, the pump chamber wall receives the pressing force before the front surface of the mat part, and as a result, the pump chamber wall is elastically deformed and crushed. When the pump chamber wall is crushed, a volume of the inside decreases, and thus the fluid accommodated in the inside is pushed out, passes through the fluid passing portion, and is ejected to the moving object. In addition, the pump chamber wall is restored when the pressing force from the moving object is released. At the time of this restoration, the volume of the inside increases, and thus a suction force acts, and the fluid of the outside passes through the fluid passing portion and is accommodated in the inside. As a result, it is possible to efficiently clean the moving object while saving energy.

### Advantageous Effects of Invention

According to some aspects of the present disclosure, a cleaning effect is excellent, a structure is simple, and it is possible to clean a moving object while saving energy.

### Brief Description of Drawings

FIG. 1 is a plan view of a mat for cleaning according to a first embodiment.
FIG. 2 is a side view of the mat for cleaning according to the first embodiment.
FIG. 3 is a cross-sectional view along line III-III of FIG. 2.
FIG. 4 is an explanatory view illustrating an operation of a pump part.
FIG. 5 is a cross-sectional view of a mat for cleaning according to a second embodiment.
FIG. 6 is a cross-sectional view of a mat for cleaning according to a third embodiment.
FIG. 7 is a cross-sectional view of a mat for cleaning according to a fourth embodiment.
FIG. 8 is a plan view of a mat for cleaning according to a fifth embodiment.
FIG. 9 is an enlarged view showing a pump part of the mat for cleaning according to the fifth embodiment.
FIG. 10 is an explanatory view illustrating an operation of the mat for cleaning according to the fifth embodiment.
FIG. 11 is a plan view of a mat for cleaning according to a sixth embodiment.
FIG. 12 is an explanatory view showing a usage state of the mat for cleaning according to the sixth embodiment.
FIG. 13 is a view showing an example of a moving object cleaning device according to the first embodiment.
FIG. 14 is a view showing an example of a moving object cleaning device according to the second embodiment.
FIG. 15 is an explanatory view showing a usage state of a moving object cleaning device according to the second embodiment.

### Description of Embodiments

Hereinafter, embodiments of a mat for cleaning and a moving object cleaning device according to the present disclosure will be described in detail with reference to the drawings.

First, mats for cleaning according to the embodiments will be described. The mat for cleaning is a mat that removes extraneous matter adhering to a moving object by ejecting a fluid. The mat for cleaning has a light weight and simple structure, can be easily installed by being simply laid at a desired place such as a store, a house entrance, or a construction site, and has a wide range of applications. Here, the moving object is a portion of a moving object that comes into contact with a road surface or the like and broadly includes foot soles and shoe soles for humans, tires for vehicles, and the like. The fluid to be ejected is a gas or a liquid, and in the case of a liquid, water, a detergent, a chemical solution, a disinfectant solution, a low-viscosity oil, and the like are included.

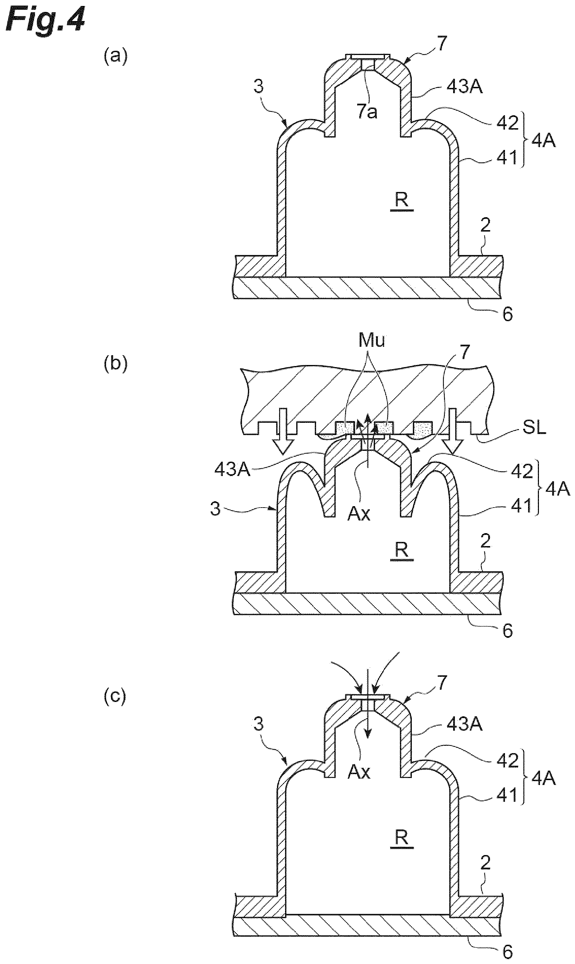

In the mats for cleaning 1A to IF according to the following first to sixth embodiments, an aspect in which extraneous matter Mu such as mud adhering to the shoe sole SL (see FIG. 4) is removed by air Ax (an example of a fluid) being ejected will be described as an example, but it is also possible to use a liquid as the fluid. Here, the shoe sole SL may be a shoe sole SL having a wide grounding surface such as that of a business shoe, a sneaker, a slipper, a sandal, a boot, a long boot, or the like, or a shoe sole SL having a narrow grounding surface such as that of a heel or the like. In the following description, a plan view shows the mats for cleaning 1A to IF or the moving object cleaning devices 100A and 100B from above in a state where the mats for cleaning 1A to IF or the moving object cleaning devices 100A and 100B are installed.

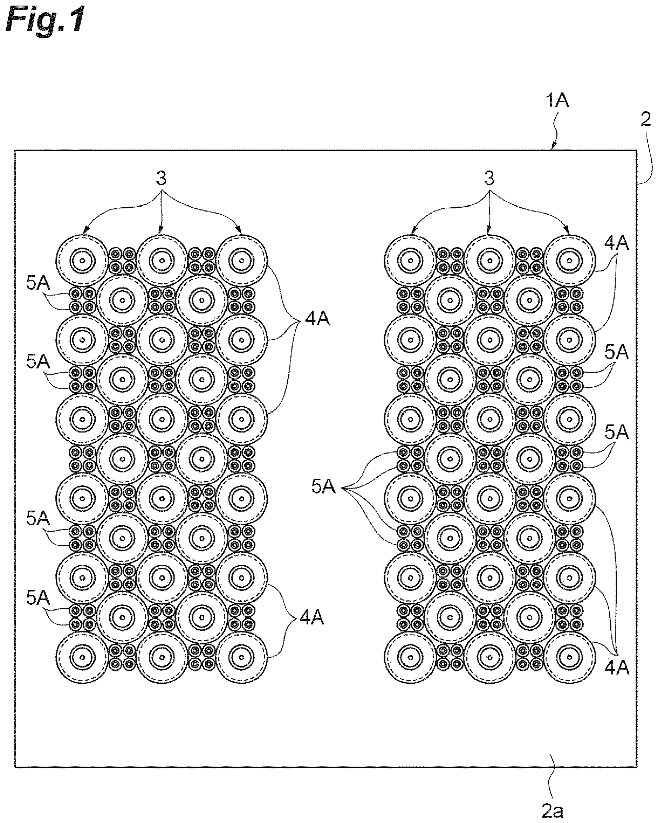

As shown in FIGS. 1, 2, 3, and 4, the mat for cleaning 1A according to the first embodiment includes a mat part 2 that receives a pressing force from the shoe sole SL and a plurality of pump parts 3 disposed on a front surface 2a of the mat part 2 facing the shoe sole SL. The mat part 2 and the pump part 3 are integrally formed with each other in consideration of efficiency at the time of manufacturing, but they may be manufactured as separate articles and assembled later by bonding or the like. The front surface 2a of the mat part 2 facing the moving object (for example, the shoe sole) is an upper surface of a side that receives the pressing force from the moving object.

A plurality of pump parts 3 are disposed on the front surface 2a of the mat part 2 at intervals. The pump part 3 includes a pump chamber wall 4A protruding from the mat part 2 and an ejection port 7a (an example of a fluid passing portion) provided in the pump chamber wall 4A and allowing communication between the inside R and the outside. The pump chamber wall 4A is elastically deformable and is made of rubber (a resin), for example.

Here, with reference to FIG. 4, a basic principle of cleaning the shoe sole SL with the mat for cleaning 1A will be described. FIG. 4(a) shows a state where the pump part 3 does not receive a pressing force from the shoe sole SL (a stationary state), FIG. 4(b) shows a state where the pump part 3 receives a pressing force from the shoe sole SL, and FIG. 4(c) shows a state where the pump part 3 is released from the pressing force of the shoe sole SL and restored.

When the shoe sole SL steps on the pump part 3 (see FIG. 4(a)) in a stationary state and presses the pump chamber wall 4A, the pump chamber wall 4A is deformed and crushed (see FIG. 4(b)). When the pump chamber wall 4A is crushed, the air Ax accommodated in the inside R is pushed out and ejected from the ejection port 7a. The extraneous matter Mu on the shoe sole SL is removed by the air Ax being ejected. Further, when the shoe sole SL is separated from the pump part 3, the pressing force applied to the pump chamber wall 4A is released. When the pump part 3 is released from the pressing force, the pump chamber wall 4A is restored while sucking the air Ax into the inside R through the ejection port 7a with a restoring force of an elastic body. By repeating this work, for example, the cleaning action can be sustained by simply stepping on the mat for cleaning.

In the present embodiment, since the plurality of pump parts 3 are disposed apart from each other, the pump chamber walls 4A are deformed independently of each other. That is, the pump chamber wall 4A that has not received the pressing force from the shoe sole SL is not deformed, and thus it is possible to prevent the air Ax from being ejected from the pump part 3 at a position away from the shoe sole SL and it is possible to curb useless ejection of the air Ax.

Next, a structure of the mat for cleaning 1A according to the present embodiment will be described in more detail. The mat part 2 includes the front surface 2a facing the shoe sole SL and a back surface 2b on an opposite side. The pump chamber wall 4A is provided on the front surface 2a of the mat part 2, and a lower portion (a side of the back surface 2b) of the inside R of the pump chamber wall 4A opens. A mat-shaped (sheet-shaped) bottom member 6 is installed on the back surface 2b of the mat part 2. That is, the inside R of the pump chamber wall 4A is closed at a lower opening by the bottom member 6, and as a result, the inside R of the pump chamber wall 4A is closed except for the ejection port 7a.

In the present embodiment, the inside R of the pump chamber wall 4A is closed by the bottom member 6 separate from the mat part 2. That is, by removing the bottom member 6 from the mat part 2, the inside R of the pump chamber wall 4A can be opened. As a result, cleaning and maintenance of the inside R of the pump chamber wall 4A becomes easy. The mat part 2 may be provided with a closing portion that closes the inside R of the pump chamber wall 4A without being provided with the bottom member 6. Cleaning or the like in this case is carried out through the ejection port 7a as necessary.

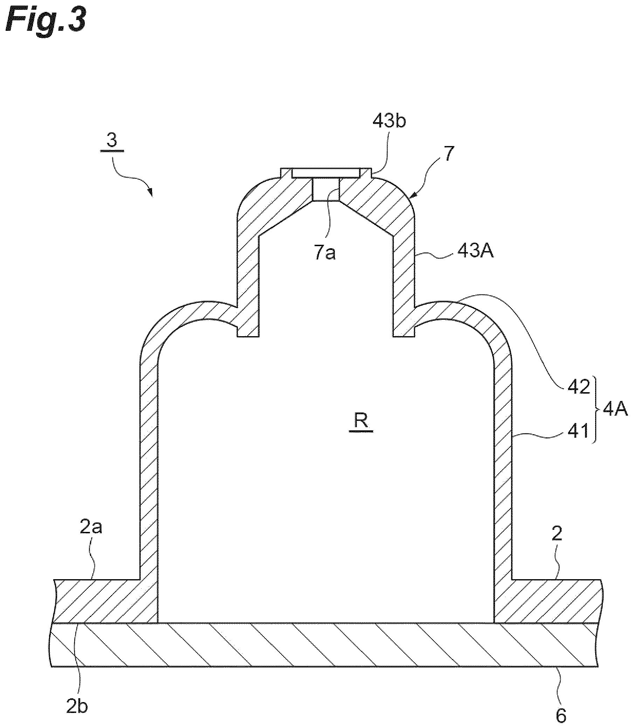

The pump chamber wall 4A includes a peripheral wall portion 41 having a tubular shape (see FIG. 3) erected substantially perpendicular to the front surface 2a of the mat part 2 and a ceiling portion 42 that covers an upper portion of the peripheral wall portion 41 having a tubular shape. In a case where the ceiling portion 42 is viewed in cross section, the ceiling portion 42 exhibits an arc shape (a curved shape) that swells upward (outward) from a peripheral edge connected to the peripheral wall portion 41 toward a center. Further, the pump chamber wall 4A is provided with a pressing force receiving portion 7 that protrudes in a tubular shape from a slightly recessed central portion of the ceiling portion 42. A passage for the air Ax (an example of a fluid) is formed in the inside R of the pressing force receiving portion 7 to communicate with the inside R of the pump chamber wall 4A. The pressing force receiving portion 7 according to the present embodiment has a cylindrical shape, but the tubular shape is not limited to a case where an external shape is a circular shape and may be a polygonal shape.

An inner diameter of the pressing force receiving portion 7 is reduced in a tapered shape at an upper portion, and the ejection port 7a for ejecting the air Ax is formed at an upper end portion of the pressing force receiving portion 7. The upper portion of the pressing force receiving portion 7 is provided with a wall-shaped protrusion 43b that protrudes to surround the ejection port 7a in a plan view. In a case where the shoe sole SL steps on the pressing force receiving portion 7, it is possible to prevent the ejection port 7a from being blocked due to the interference of the protrusion 43b. The protrusion 43b may be provided with a notch for allowing the air Ax to escape, but for example, the shoe sole SL may have a non-slip groove or the like, and thus the notch may not be provided.

The pressing force receiving portion 7 is provided to protrude from a part (a central portion) of the ceiling portion 42 of the pump chamber wall 4A. That is, in a case where the pump part 3 is viewed in a plan view, an area of the pressing force receiving portion 7 is smaller than an area of the ceiling portion 42. The pressing force receiving portion 7 receives the pressing force from the shoe sole SL before the ceiling portion 42. Further, since the pressing force receiving portion 7 has a smaller area than the ceiling portion 42, the pressing force is efficiently transmitted to the ceiling portion 42 as compared with the case where the pressing force is received by the entire ceiling portion 42. That is, according to Pascal's principle, the pressing force is received to be concentrated in the pressing force receiving portion 7 and is transmitted to the ceiling portion 42, and thus the pump chamber wall 4A can be crushed, an internal pressure can be effectively increased, and an ejection force of the air Ax ejected from the ejection port 7a can be increased. In other words, according to the present embodiment, the pressing force works effectively around a part of the ceiling portion 42 via the pressing force receiving portion 7, and the pump chamber wall 4A is easily deformed, and thus the ejection of the air Ax from the ejection port 7a is promoted.

It is also possible to provide the fluid passing portion separately from the pressing force receiving portion. For example, the pressing force receiving portion 7 may be a solid member, and the ejection port 7a may be provided while avoiding the pressing force receiving portion 7. However, as described above, by providing the ejection port 7a in the pressing force receiving portion 7, it becomes possible to eject the air Ax at the minimum distance to the shoe sole SL interfering with the pressing force receiving portion 7.

As shown in FIG. 1, the plurality of pump parts 3 provided on the front surface 2a of the mat part 2 are disposed in two (a plurality of) groups, one for the right foot and the other for the left foot. The group for the right foot (a right side in FIG. 1) and the group for the left foot (a left side in FIG. 1) are separated from each other and are symmetrically disposed with a center of the mat part 2 interposed therebetween. Pedestrians and workers who want to clean the shoe sole SL put the shoe sole SL of the right foot on the group for the right foot, put the shoe sole SL of the left foot on the group for the left foot, and step on the groups at those places. Therefore, continuous cleaning is possible by alternating left and right.

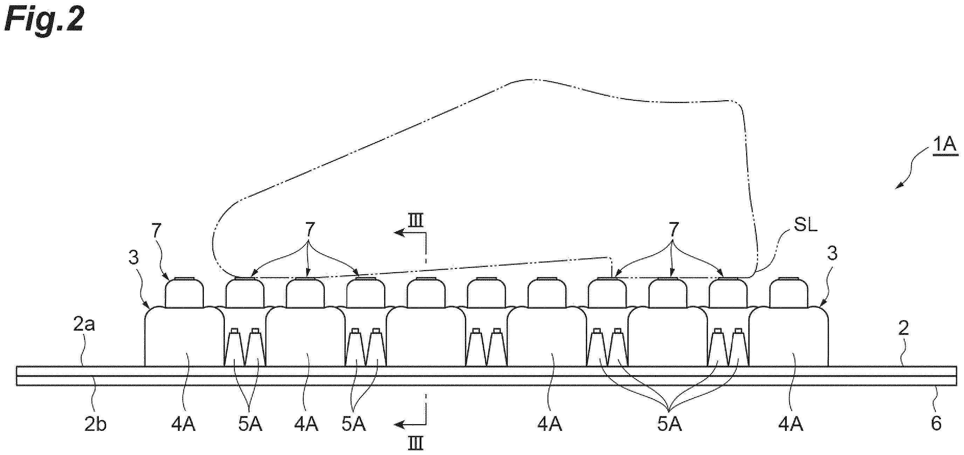

Further, as shown in FIG. 2, a plurality of projections 5A (an example of an extraneous matter removing part) for removing the extraneous matter Mu adhering to the shoe sole SL by coming into direct contact with and interfering with the shoe sole SL are provided on the front surface 2a of the mat part 2. The projection 5A is a member erected in a conical shape from the front surface 2a of the mat part 2 and is disposed between the plurality of pump parts 3. A height of the projection 5A is lower than a height of the pump part 3, a flexibility of the projection 5A is lower than that of the pump chamber wall 4A, and the projection 5A is stronger than the pump chamber wall 4A. When the pump chamber wall 4A is crushed by the pressing force from the shoe sole SL, the shoe sole SL comes into contact with the projection 5A.

The projection 5A is less likely to bend than the pump chamber wall 4A, and by coming into contact with the sole SL, the projection 5A has a function of scraping off the extraneous matter Mu adhering to the groove or the like of the shoe sole SL. That is, the projection 5A assists the ejection of the air Ax and removes the extraneous matter Mu adhering to the shoe sole SL with a function and action different from that of the ejection of the air Ax. Further, when the shoe sole SL steps on the pump chamber wall 4A, the projection 5A interferes with the shoe sole SL to prevent the shoe sole SL from reaching the front surface 2a of the mat part 2. As a result, it is possible to prevent a deposit and the like that have been removed from the shoe sole SL and deposited on the front surface 2a of the mat part 2 from adhering to the shoe sole SL again. The projection 5A may be provided directly on the front surface 2a of the mat part 2, or may be provided indirectly thereon. For example, a hole for avoiding the pump chamber wall 4A is provided in a projection mat provided with the plurality of projections 5A, and the projection mat is stacked on the front surface 2a of the mat part 2, and thus the projection 5A may be provided indirectly.

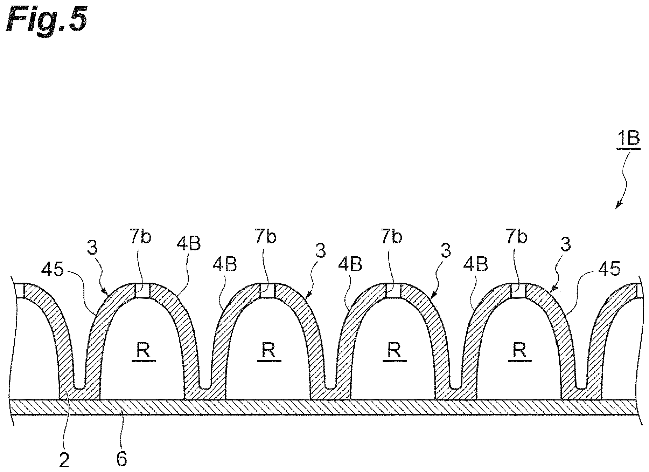

Next, the mat for cleaning 1B according to the second embodiment will be described with reference to FIG. 5. The mat for cleaning 1B according to the present embodiment has structures and elements common to the mat for cleaning 1A according to the first embodiment. Therefore, the structures and elements common to the first embodiment are designated by the same reference signs as in the first embodiment, and detailed description thereof will be omitted.

The mat for cleaning 1B according to the present embodiment also removes the extraneous matter Mu adhering to the shoe sole SL by ejecting the air Ax. The mat for cleaning 1B includes the mat part 2 and the pump part 3, and the pump part 3 includes a pump chamber wall 4B protruding from the mat part 2 and an ejection port 7b provided in the pump chamber wall 4B. The ejection port 7b functions as a fluid passing portion.

The pump chamber wall 4B includes a peripheral wall portion 45 that protrudes from the front surface 2a of the mat part 2 and has an external shape of a dome shape curved as a whole. In the pump chamber wall 4B according to the present embodiment, there is no distinction between the peripheral wall portion 45 and the ceiling portion 42, and substantially the entire peripheral wall portion 45 corresponds to the ceiling portion. The ejection port 7b is provided at an apex portion which is a center of the peripheral wall portion 45. In the mat for cleaning 1B according to the present embodiment, the projection 5A is not provided, and the plurality of pump parts 3 are disposed in a dense state with no gap. The meaning of no gap means that even if the shoe sole SL applies a pressing force to the pump chamber wall 4B to crush the pump chamber wall 4B, there is not present a gap such that the shoe sole SL (the moving object) comes into contact with the front surface 2a of the mat part 2. Therefore, in the mat for cleaning 1B according to the present embodiment, an ejection density of the air Ax becomes high, and thus, in a case where the extraneous matter Mu is removed by only the injection of the air Ax, removal performance for the extraneous matter Mu can be improved.

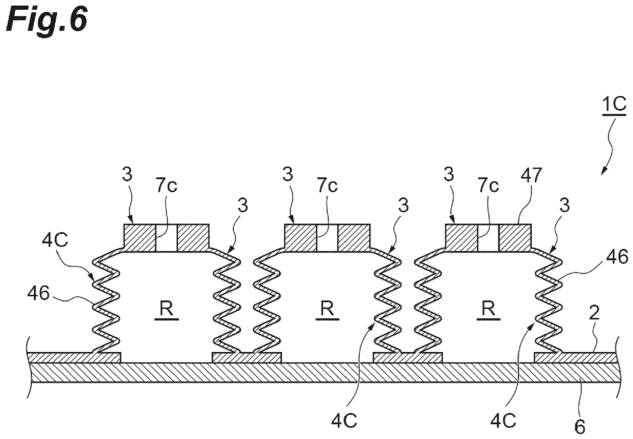

Next, the mat for cleaning 1C according to the third embodiment will be described with reference to FIG. 6. The mat for cleaning 1C according to the present embodiment has structures and elements common to the mats for cleaning 1A and 1B according to the above embodiments. Therefore, the structures and elements common to the above embodiments are designated by the same reference signs as those of the above embodiments, and detailed description thereof will be omitted.

The mat for cleaning 1C according to the present embodiment also removes the extraneous matter Mu adhering to the shoe sole SL by ejecting the air Ax. The mat for cleaning 1C includes the mat part 2 and the pump part 3. The pump part 3 includes a pump chamber wall 4C protruding from the mat part 2 and an ejection port 7c provided in the pump chamber wall 4C.

The pump chamber wall 4C includes an extension and contraction wall 46 that has a tubular shape protruding from the front surface 2a of the mat part 2 and a bellows shape. A top plate portion (a ceiling portion) 47 is installed in an upper portion of the extension and contraction wall 46, and the top plate portion 47 is provided with the ejection port 7c that functions as a fluid passing portion. The extension and contraction wall 46 has a certain shape stability in a stationary state and accommodates the air Ax in the inside R in a state where a pressing force is not received from the shoe sole SL. The extension and contraction wall 46 is elastically deformed and crushed when the extension and contraction wall 46 receives a pressing force from the shoe sole SL, and the air Ax in the inside R is ejected from the ejection port 7c to remove the extraneous matter Mu adhering to the shoe sole SL. Further, the extension and contraction wall 46 is restored when the extension and contraction wall 46 is released from the pressing force from the shoe sole SL, and the air Ax is sucked into the inside R via the ejection port 7c.

According to the mat for cleaning 1C according to the present embodiment, there is an advantageous effect that a capacity change in the inside R of the pump chamber wall 4C at the time of pressing and releasing is large and a flow rate of the air (the amount of the fluid) ejected via the ejection port 7c is large.

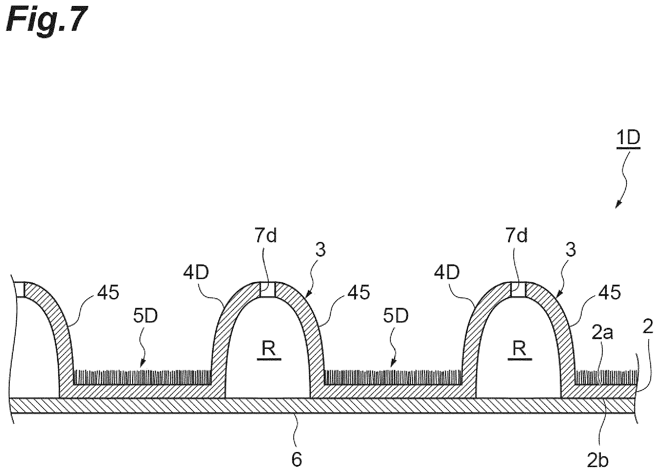

Next, the mat for cleaning 1D according to the fourth embodiment will be described with reference to FIG. 7. The mat for cleaning 1D according to the present embodiment has structures and elements common to the mats for cleaning 1A to 1C according to the above embodiments. Therefore, the structures and elements common to the above embodiments are designated by the same reference signs as those of the above embodiments, and detailed description thereof will be omitted.

The mat for cleaning 1D according to the present embodiment also removes the extraneous matter Mu adhering to the shoe sole SL by ejecting the air Ax. The mat for cleaning 1D includes a mat part 2 and a pump part 3. The pump part 3 includes a pump chamber wall 4D protruding from the mat part 2 and an ejection port 7d provided in the pump chamber wall 4D.

The pump chamber wall 4D includes the peripheral wall portion 45 that protrudes from the front surface 2a of the mat part 2 and has an external shape of a dome shape curved as a whole. In the pump chamber wall 4D according to the present embodiment, there is no distinction between the peripheral wall portion 45 and the ceiling portion, and substantially the entire peripheral wall portion 45 corresponds to the ceiling portion. The ejection port 7d is provided at an apex portion which is a center of the peripheral wall portion 45. An extraneous matter removing mat 5D (an example of an extraneous matter removing part) is provided on the front surface 2a of the mat part 2. The extraneous matter removing mat 5D is a carpet-processed mat or a brush-processed mat and is installed between the plurality of pump parts 3. Raised naps of the carpet-processed mat or a brush of the brush-processed mat interferes with the shoe sole SL and is effective in removing, for example, the extraneous matter Mu adhering to the groove of the shoe sole SL, and thus it is possible to improve the cleaning effect in combination with the ejection of the air Ax.

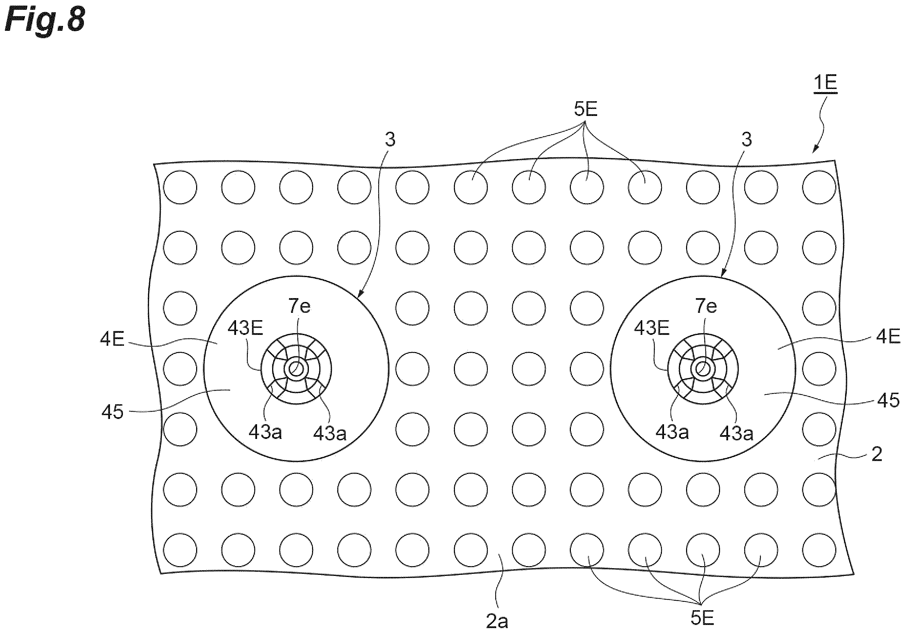

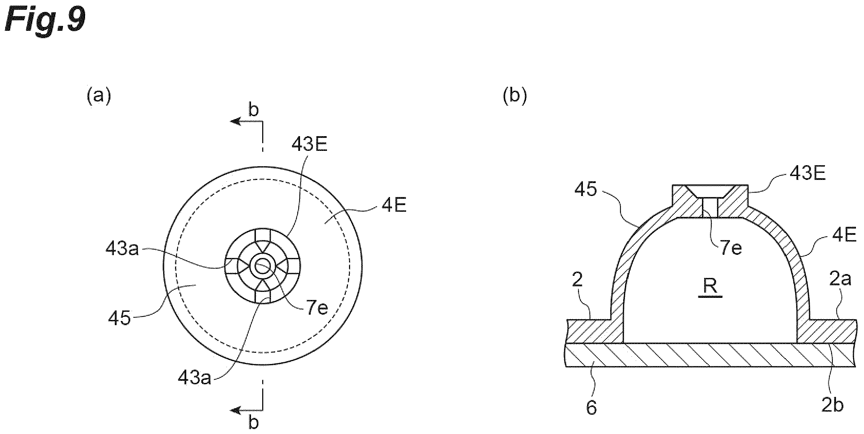

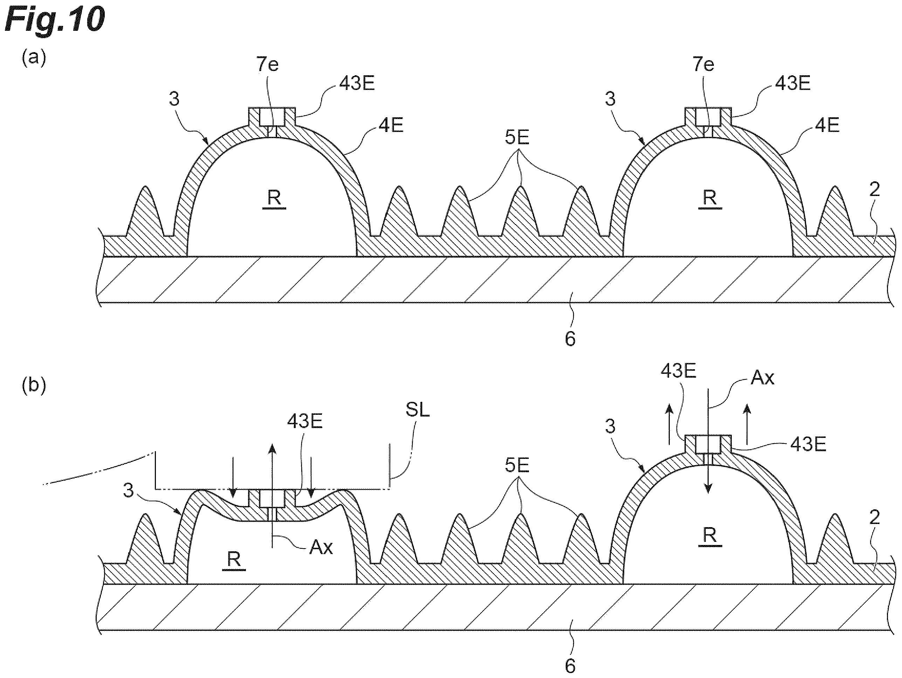

Next, the mat for cleaning 1E according to the fifth embodiment will be described with reference to FIGS. 8, 9, and 10. FIG. 8 is a plan view of the mat for cleaning 1E, FIG. 9 is an enlarged view showing a part of the pump part 3, FIG. 9(a) is a plan view, and FIG. 9(b) is a cross-sectional view along line b-b of FIG. 9(a). FIG. 10 is a view for illustrating an operation of the mat for cleaning 1E, FIG. 10(a) is a cross-sectional view showing a stationary state, and FIG. 10(b) is a cross-sectional view showing a state where a pressing force is applied to the pump part 3 from the shoe sole SL and a state where the pump part 3 is released from the pressing force. The mat for cleaning 1E according to the present embodiment has structures and elements common to the mats for cleaning 1A to 1D according to the above embodiments. Therefore, the structures and elements common to the above embodiments are designated by the same reference signs as those of the above embodiments, and detailed description thereof will be omitted.

The mat for cleaning 1E according to the present embodiment also removes the extraneous matter Mu adhering to the shoe sole SL by ejecting the air Ax. The mat for cleaning 1E includes the mat part 2 and the pump part 3. The pump part 3 includes a pump chamber wall 4E protruding from the mat part 2 and an ejection port 7e provided in the pump chamber wall 4E (see FIGS. 8 and 9).

When the shoe sole SL steps on the pump part 3 (see FIG. 10(a)) in a stationary state and presses the pump chamber wall 4E, the pump chamber wall 4E is deformed and crushed (see the pump part 3 on the left side of the FIG. 10(b)). When the pump chamber wall 4E is crushed, the air Ax accommodated in the inside R is pushed out and ejected from the ejection port 7e. The extraneous matter Mu on the shoe sole SL is removed by the air Ax being ejected. Further, when the shoe sole SL is separated from the pump part 3, the pressing force applied to the pump chamber wall 4E is released. When the pump part 3 is released from the pressing force, the pump chamber wall 4A is restored while sucking the air Ax into the inside R through the ejection port 7a with a restoring force of an elastic body (see the pump part 3 on the right side of FIG. 10(b)). By repeating this work, for example, the cleaning action can be sustained by simply stepping on the mat for cleaning.

The pump chamber wall 4E includes the peripheral wall portion 45 that protrudes from the front surface 2a of the mat part 2 and has an external shape of a dome shape curved as a whole. In the pump chamber wall 4E according to the present embodiment, there is no distinction between the peripheral wall portion 45 and the ceiling portion, and substantially the entire peripheral wall portion 45 corresponds to the ceiling portion. The ejection port 7e is provided at an apex portion which is a center of the peripheral wall portion 45. The peripheral wall portion 45 is provided with a blockage prevention wall 43E that protrudes to surround the ejection port 7e in a plan view. In a case where the shoe sole SL steps on the blockage prevention wall 43E, it is possible to prevent the ejection port 7e from being blocked due to the interference of the blockage prevention wall 43E. The blockage prevention wall 43E is provided with a notch 43a (a close contact prevention groove) for allowing the air Ax to escape. Even if the shoe sole SL has no groove or the like and the shoe sole SL comes into close contact with an upper end of the blockage prevention wall 43E to block the inside of the blockage prevention wall 43E, it is possible to allow the ejected air Ax (an example of a fluid) to escape through the notch 43a.

Further, the blockage prevention wall 43E functions as the pressing force receiving portion 7. That is, the blockage prevention wall 43E is provided to protrude from a part (a central portion) of the peripheral wall portion 45, and in a case where the pump part 3 is viewed in a plan view, an area of the blockage prevention wall 43E (an area of the inside surrounded by the blockage prevention wall 43E) is smaller than an area of the peripheral wall portion 45. The blockage prevention wall 43E receives the pressing force from the shoe sole SL before the peripheral wall portion 45. Further, since the blockage prevention wall 43E has a smaller area than the peripheral wall portion 45, the pressing force is efficiently transmitted to the peripheral wall portion 45 as compared with the case where the pressing force is received by the entire peripheral wall portion 45. That is, according to Pascal's principle, the pressing force is received to be concentrated in the pressing force receiving portion 7 and is transmitted to the peripheral wall portion 45, and thus the pump chamber wall 4E can be crushed, an internal pressure can be effectively increased, and an ejection force of the air Ax ejected from the ejection port 7e can be increased. In other words, according to the present embodiment, the pressing force works effectively around a part of the peripheral wall portion 45 via the blockage prevention wall 43E, and the pump chamber wall 4E is easily deformed, and thus the ejection of the fluid from the ejection port 7e is promoted.

Further, a plurality of projections 5E (an example of an extraneous matter removing part) for removing the extraneous matter Mu adhering to the shoe sole SL by coming into direct contact with and interfering with the shoe sole SL are provided on the front surface 2a of the mat part 2. The projection 5E is a member erected from the front surface 2a of the mat part 2 and is disposed between the plurality of pump parts 3. A height of the projection 5E is lower than a height of the pump part 3. The projection 5E is less likely to bend than the pump chamber wall 4E, and by coming into contact with the sole SL, the projection 5E has a function of scraping off the extraneous matter Mu adhering to the groove or the like of the shoe sole SL. That is, the projection 5E removes the extraneous matter Mu adhering to the shoe sole SL with a function and action different from that of the ejection of the air Ax. Further, the projection 5E interferes with the shoe sole SL that steps on the pump chamber wall 4E to prevent the shoe sole SL from reaching the front surface 2a of the mat part 2. As a result, it is possible to prevent a deposit and the like that have been removed from the shoe sole SL and deposited on the front surface 2a of the mat part 2 from adhering to the shoe sole SL again.

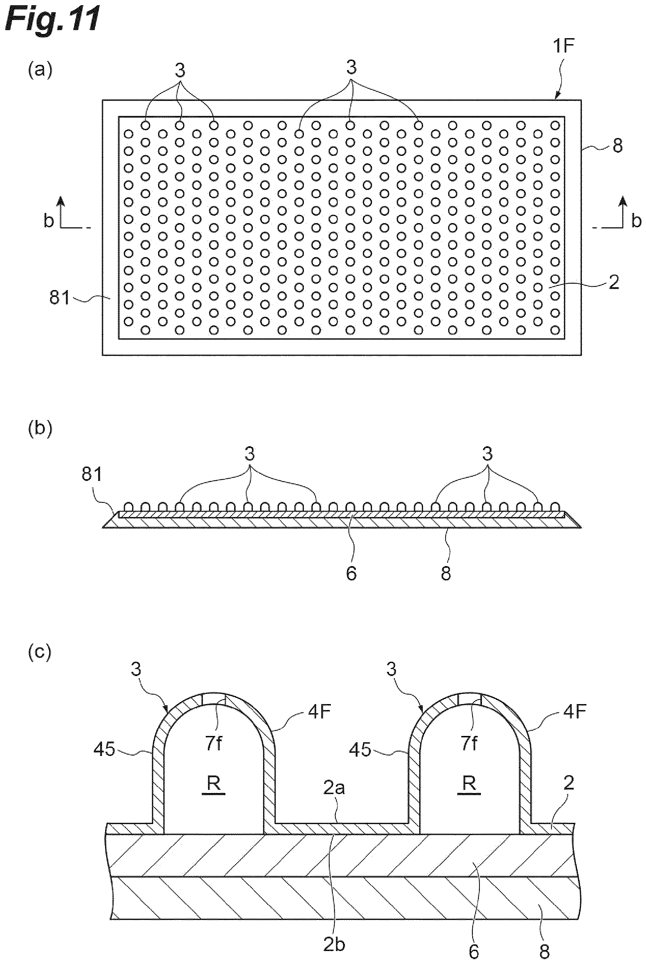

Next, the mat for cleaning IF according to the sixth embodiment will be described with reference to FIG. 11. FIG. 11 is a view showing the mat for cleaning IF according to the sixth embodiment, FIG. 11(a) is a plan view, FIG. 11(b) is a cross-sectional view along line b-b of FIG. 11(a), and FIG. 11(c) is an enlarged cross-sectional view of a part of the FIG. 11(b). The mat for cleaning IF according to the present embodiment has structures and elements common to the mats for cleaning 1A to 1E according to the above embodiments. Therefore, the structures and elements common to the above embodiments are designated by the same reference signs as those of the above embodiments, and detailed description thereof will be omitted.

The mat for cleaning IF is a mat installed at an entrance or the like of a facility for cleaning the shoe sole SL and removes the extraneous matter Mu adhering to the shoe sole SL by ejecting the air Ax. The mat for cleaning IF includes the mat part 2 and the pump part 3. The pump part 3 includes a pump chamber wall 4F and an ejection port 7f provided in the pump chamber wall 4F. The ejection port 7f functions as a fluid passing portion. The pump chamber wall 4F includes the peripheral wall portion 45 that protrudes from the front surface 2a of the mat part 2 and has an external shape of a dome shape curved as a whole. In the pump chamber wall 4F according to the present embodiment, there is no distinction between the peripheral wall portion 45 and the ceiling portion, and substantially the entire peripheral wall portion 45 corresponds to the ceiling portion. The ejection port 7f is provided at an apex portion which is a center of the peripheral wall portion 45.

Further, the mat for cleaning IF includes the bottom member 6 in contact with the back surface 2b of the mat part 2 and a frame member 8 that supports the mat part 2 and the bottom member 6 in a holding state. The frame member 8 is provided with a recess for accommodating the mat part 2 and the bottom member 6, and the mat part 2 and the bottom member 6 are positioned by being accommodated in the recess to prevent displacement from each other. Further, an inclined surface 81 having a downward slope when viewed from the front surface 2a of the mat part 2 is formed on a peripheral edge of the frame member 8. The inclined surface 81 smoothly connects the front surface 2a of the mat part 2 to an installation surface (for example, a road surface) on which the mat for cleaning IF is installed without any step. By forming the inclined surface 81 on the peripheral edge of the frame member 8, it becomes difficult for a pedestrian to stumble. In the present embodiment, the mat part 2, the bottom member 6, and the frame member 8 are manufactured as separate bodies and assembled together to be integrated, but they may be manufactured integrally from the beginning.

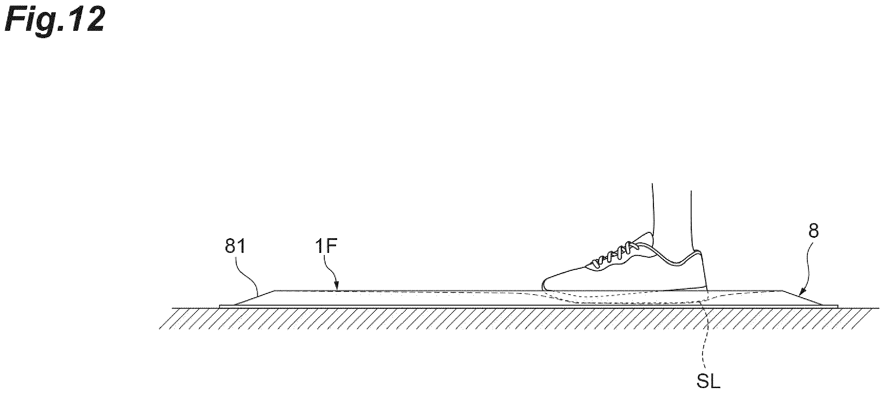

FIG. 12 is a view illustrating a usage state of the mat for cleaning IF. The mat for cleaning IF can be used at an entrance or the like of a facility such as a hotel, an exhibition hall, a department store, or a home center where people frequently come in and out. Since the mat for cleaning IF includes the frame member 8, the mat part 2 and the bottom member 6 are not easily displaced from each other, and the frame member 8 protects the bottom member 6, and thus the durability can be improved. By installing the mat for cleaning IF at the entrance of the facility, it is possible to minimize the amount of the extraneous matter Mu that people bring into an interior and reduce the labor for cleaning the interior.

Further, through application of the mats for cleaning 1A to 1E according to the first to fifth embodiments described above, a mat for cleaning in which the mats for cleaning 1A to 1E are combined with the above-mentioned frame member 8 may be formed, or the features of the mats for cleaning 1A to 1E may be adopted to the mat for cleaning IF. Therefore, for example, a modification example in which the pump chamber wall 4F of the mat for cleaning IF is provided with the pressing force receiving portion 7 or the blockage prevention wall 43E, or is provided with the extraneous matter removing part such as projections 5A and 5E may be formed.

Next, the operational effects of the mats for cleaning 1A to IF according to the embodiments will be described. The following operational effects can be exhibited even in a case where the features of the mats for cleaning are adopted to the mobile body cleaning devices 100A and 100B which will be described later. In each of the mats for cleaning 1A to IF according to the embodiments, each of the pump chamber walls 4A to 4F of the pump part 3 protrudes from the mat part 2. Therefore, when the shoe sole SL (an example of a moving object) applies a pressing force to the mat part 2, each of the pump chamber walls 4A to 4F receives the pressing force before the front surface 2a of the mat part 2, and as a result, each of the pump chamber walls 4A to 4F is deformed and crushed. When each of the pump chamber walls 4A to 4F is crushed, the air Ax (an example of a fluid) accommodated in the inside R is pushed out, passes through each of the ejection ports 7a to 7f (an example of a fluid passing portion), and is ejected to the shoe sole SL that applies a pressing force. As a result, according to the mats for cleaning 1A to IF of the embodiments, it is possible to eject the air Ax using the pressing force received from the shoe sole SL, and it is possible to efficiently clean the moving object while saving energy.

In other words, the mats for cleaning 1A to IF have a function of converting the pressing force from the shoe sole SL into ejection energy for the air Ax and thus can realize a function which is the same as ejecting a fluid using a pump that requires external energy with substantially no power. As a result, according to the mats for cleaning 1A to IF of the embodiments, the shoe sole SL which is a moving object can be excellently cleaned with substantially no power and a simple structure.

Further, each of the pump chamber walls 4A to 4F of the mats for cleaning 1A to IF according to the embodiment can be elastically deformed. When each of the pump chamber walls 4A to 4F is elastically deformed and crushed by the pressing force from the shoe sole SL, a volume of the inside R decreases. As a result, the air Ax accommodated in the inside R is pushed out, passes through each of the ejection ports 7a to 7f, and is ejected to the shoe sole SL. Further, each of the pump chamber walls 4A to 4F is restored when each of the pump chamber walls 4A to 4F is released from the pressing force of the shoe sole SL. At the time of this restoration, the volume of the inside R increases, and thus a suction force acts, and the air Ax of the outside passes through each of the ejection ports 7a to 7f and is accommodated in the inside R. As a result, the shoe sole SL can be efficiently cleaned while saving energy, and in particular, continuous cleaning is possible by repeatedly applying and releasing the pressing force from the shoe sole SL.

Moreover, according to the mats for cleaning 1A to IF of the embodiments, the air Ax is ejected directly toward a part of the shoe sole SL that is in contact with each of the pump chamber walls 4A to 4F and applies a pressing force. In particular, according to the mats for cleaning 1A to IF of the embodiments, each of the ejection ports 7a to 7f is provided at the apex portion of the ceiling portion 42, the top plate portion 47 or the peripheral wall portion 45 of each of the pump chamber walls 4A to 4F, and thus the air Ax can be ejected from directly below a part of the shoe sole SL that applies the pressing force. As a result, the extraneous matter Mu adhering to the groove or the like of the shoe sole SL can be efficiently removed.

Further, the inside R of each of the pump chamber walls 4A to 4F of the mats for cleaning 1A to IF according to the embodiments is closed except for each of the ejection ports 7a to 7f. That is, when the pressing force from the shoe sole SL is received, the air Ax in the inside R of each of the pump chamber walls 4A to 4F does not move to other portions, but is concentrated in each of the ejection ports 7a to 7f, and thus the air Ax is efficiently ejected.

Further, each of the mats for cleaning 1A to IF according to the embodiments includes a bottom member 6 in contact with the back surface 2b of the mat part 2, and the inside R of each of the pump chamber walls 4A to 4F is closed by the bottom member 6. Therefore, for example, by removing the bottom member 6, the inside R of each of the pump chamber walls 4A to 4F opens, and thus the inside R can be easily cleaned.

Further, in the mats for cleaning 1A to IF according to the embodiments, the air Ax is used as a fluid to be ejected. As a result, the extraneous matter Mu can be efficiently removed without making the surroundings wet or soiled. In the mats for cleaning 1A to IF according to the embodiments, it is also possible to eject a liquid instead of the air Ax. A cleaning effect can be enhanced using a liquid, and a bactericidal effect can be imparted using a disinfectant solution or the like.

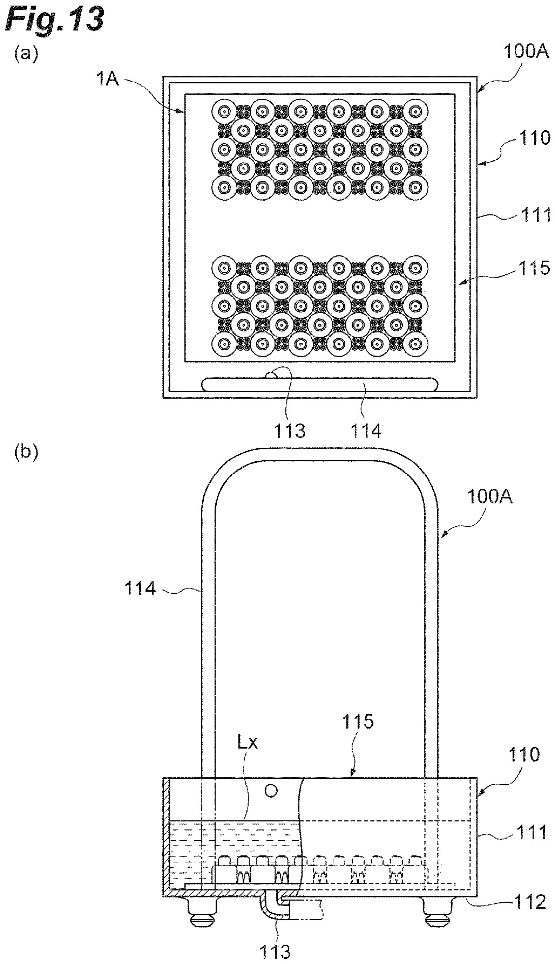

Next, the moving object cleaning device 100A will be described with reference to FIG. 13. The moving object cleaning device 100A is a device that removes the extraneous matter adhering to the moving object by ejecting a fluid and has a wide range of applications. In the following embodiment, an example in which the extraneous matter Mu such as mud adhering to the shoe sole or the tire is removed by a liquid Lx (an example of a fluid) being ejected will be described, but it is also possible to use air Ax as the fluid depending on the assumed degree of contamination. In a case where the fluid used is a liquid, water, detergent, disinfectant solution, and the like can be widely used.

In the moving object cleaning device 100A according to the present embodiment, the liquid Lx is used as a fluid, and thus a higher cleaning effect can be expected as compared with a case where the air is used as a fluid, and for example, when a disinfectant solution is used as a fluid, not only the cleaning effect but also a bactericidal effect can be expected. Therefore, the moving object cleaning device 100A can be installed and used at the entrance or the like of a food factory, a poultry house, a pig house, or the like which requires a high cleaning effect, bactericidal effect, and a disinfection effect.

The moving object cleaning device 100A may include each of the mats for cleaning 1A to IF according to the above embodiments, and as an example, a mode including the mat for cleaning 1A will be described. The moving object cleaning device 100A includes the mat for cleaning 1A, a case 110 for accommodating the mat for cleaning 1A (an example of an accommodation part), and a liquid Lx stored in the case 110 as a fluid. The mat for cleaning 1A (see FIGS. 2 and 3) includes the mat part 2 and the pump part 3. The pump part 3 includes the pump chamber wall 4A and the ejection port 7a (an example of a fluid passing portion).

The case 110 includes is a bottom portion 112 that supports the mat for cleaning 1A, an outer wall portion 111 that is erected along an outer edge of the bottom portion 112 and is disposed to surround the mat for cleaning 1A, an opening 115 that is an upper portion of the outer wall portion 111 and opens such that the shoe sole SL can be taken in and out, and a handrail portion 114 that is erected from the bottom portion 112 and is grasped by a person (a worker or the like) who cleans the shoe sole SL. A drain pipe 113 is connected to the bottom portion 112, and the drain pipe 113 is provided with an on-off valve (not shown).

A worker or the like who cleans the shoe sole SL puts the work shoes in the case 110 and steps on the mat for cleaning 1A. The pump chamber wall 4A of the pump part 3 is crushed by receiving a pressing force from the shoe sole SL by this stepping. At that time, the liquid Lx accommodated in the inside R of the pump chamber wall 4A passes through the ejection port 7f and is ejected to the shoe sole SL to remove the extraneous matter Mu adhering to the groove or the like of the shoe sole SL. Further, when the pump chamber wall 4A is released from the pressing force applied by the shoe sole SL, the pump chamber wall 4A is restored while sucking the surrounding liquid Lx, and when the pump chamber wall 4A receives the pressing force again from the shoe sole SL by the stepping, the pump chamber wall 4A is crushed to eject the liquid Lx toward the shoe sole SL. That is, the shoe sole SL repeatedly receives the ejection of the liquid Lx from the pump part 3 by the stepping of the worker or the like, and thus the extraneous matter Mu is effectively removed.

In the moving object cleaning device 100A, it is possible to adopt the mats for cleaning 1A to IF according to the above embodiments, and thus it is possible to exhibit the actions and effects of the mats for cleaning 1A to IF according to the embodiments. In particular, in the moving object cleaning device 100A, a worker who has soaked long boots or the like in the liquid Lx can remove the extraneous matter Mu adhering to the groove of the shoe sole SL in the groove without requiring external power by performing the stepping at that place.

Further, since the moving object cleaning device 100A uses the liquid Lx as the fluid to be ejected, for example, it is possible to perform chemical solution cleaning and disinfection, and not only cleaning but also disinfection of the shoe sole SL or the like can be performed. Further, since the liquid Lx ejected from the pump chamber wall 4A in response to the pressing force from the shoe sole SL is held in the case 110, it is possible to prevent leakage to the surroundings, which is also good in terms of hygiene.

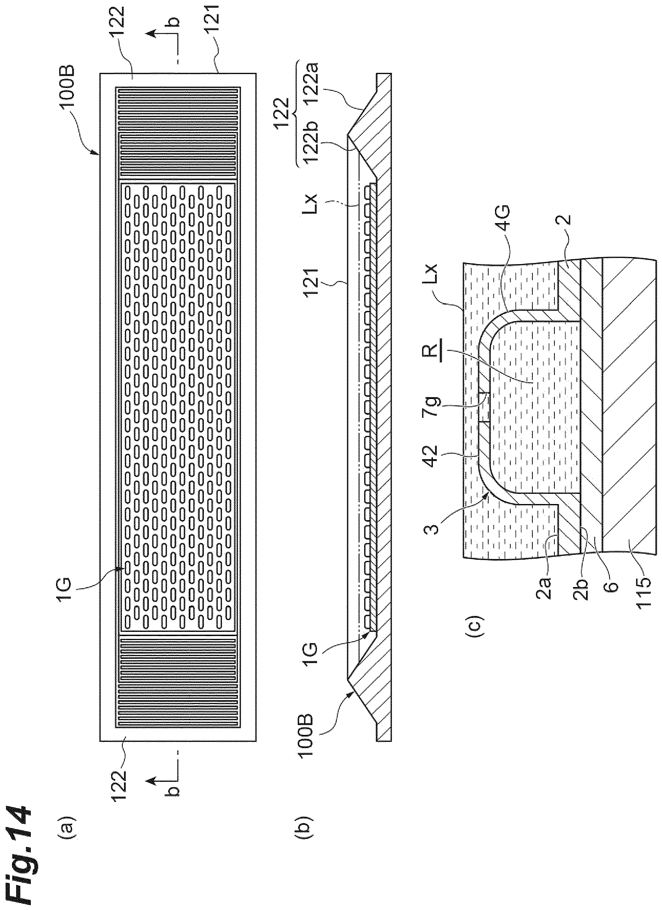

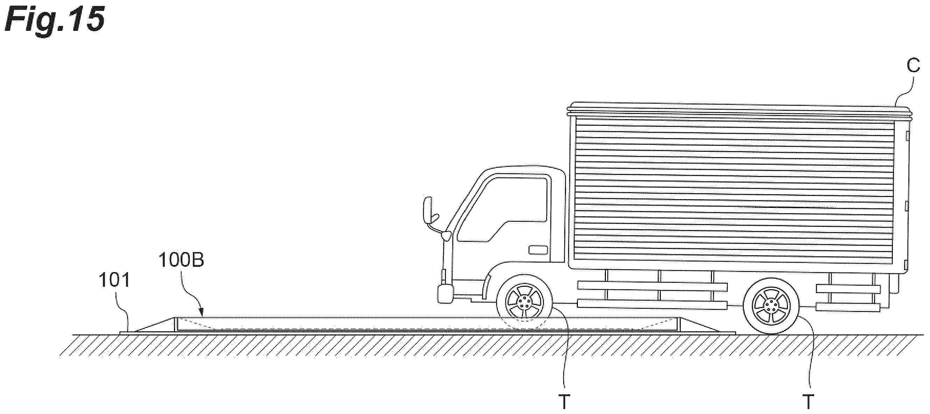

Next, the moving object cleaning device 100B according to a second embodiment will be described with reference to FIGS. 14 and 15.

FIG. 14 is a view showing the moving object cleaning device 100B according to the second embodiment, FIG. 14(a) is a plan view, FIG. 14(b) is a cross-sectional view along line b-b of FIG. 14(a), and FIG. 14(c) is an enlarged cross-sectional view of a part of the FIG. 14(b). Further, FIG. 15 is an explanatory view showing a usage state of the moving object cleaning device 100B. In the present embodiment, a tire cleaning device that removes the extraneous matter Mu such as mud adhering to the tire T by ejecting a liquid Lx (an example of a fluid) will be described as an example. It is also possible to use air as the fluid depending on the assumed degree of contamination.

The moving object cleaning device 100B assumes the tire T as a moving object to be cleaned and is used basically as a pair of left and right devices. In the following description, one moving object cleaning device 100B will be described as a representative. The moving object cleaning device 100B includes a mat for cleaning 1G, a water tank 121 for accommodating the mat for cleaning 1G (an example of an accommodation part), and a liquid Lx stored in the water tank 121 as a fluid. The moving object cleaning device 100B is installed and used on a sturdy floor steel plate 101 (see FIG. 15) installed on the road surface.

The mat for cleaning 1G has, for example, a rectangular shape, and a dimension on a short side (a lateral dimension) is desirably a dimension enough to include a width of the tire T which is a moving object, and a dimension on a long side (a longitudinal dimension) is desirably a dimension longer than a circumferential length of the tire T.

The mat for cleaning 1G includes the mat part 2 that receives a pressing force from the tire T, the pump part 3 disposed on the front surface 2a of the mat part 2 facing the tire T, and the bottom member 6 in contact with the back surface 2b of the mat part 2. The pump part 3 includes a pump chamber wall 4G protruding from the mat part 2 and an ejection port 7g formed on the pump chamber wall 4G and functioning as a fluid passing portion that allows communication between the inside R and the outside. The pump chamber wall 4G is closed by the bottom member 6 except for the ejection port 7g.

The ceiling portion 42 of the pump chamber wall 4G of the mat for cleaning 1G exhibits a longitudinally long shape of the mat for cleaning 1G when the mat for cleaning 1G is viewed in a plan view (when viewed from above), and the ejection port 7g is provided in a center of the ceiling portion 42 in a longitudinal direction. In the present embodiment, the longitudinal direction of the ceiling portion 42 of the pump chamber wall 4G is provided along a traveling direction of the tire T. For example, in a case where one pump chamber wall 4G is observed, when the tire T approaches and steps on one end portion of the ceiling portion 42 in the longitudinal direction, the one end portion side is crushed and the ceiling portion 42 is tilted. As a result, an ejection direction of the liquid Lx ejected from the ejection port 7g is also tilted from a vertical direction and is on a side of the tire T that is approaching (a front side). Further, at this time, the tire T that has passed through the ejection port 7g steps on the other end portion of the ceiling portion 42 to crush it. As a result, the ejection direction of the liquid Lx ejected from the ejection port 7g is also on a rear side to follow the tire T, which is advantageous for efficiently removing the extraneous matter Mu adhering to the tire T.

The water tank 121 for accommodating the mat for cleaning 1G and the liquid Lx is rectangular in a plan view and has a recess for accommodating the mat for cleaning 1G in a center in a longitudinal direction. The mat for cleaning 1G is positioned by being housed in the recess. Further, the recess accommodates the liquid Lx for cleaning. A water level of the liquid Lx is higher than at least a position of the ejection port 7g of the pump part 3 of the mat for cleaning 1G. That is, the pump part 3 of the mat for cleaning 1G is completely submerged in the recess.

Guide portions 122 for smoothly guiding the tire T into the recess are provided at both ends of the water tank 121 in the longitudinal direction. The guide portion 122 includes an outer inclined portion 122a that has a mountain-shaped cross section and connects an installation surface (a road surface or the like) on which the water tank 121 is installed to a top portion with a predetermined slope and an inner inclined portion 122b that connects the top portion to the recess with a predetermined slope. The tire T enters the recess without resistance by the guide portion 122 and passes over the mat for cleaning 1G, and thus the extraneous matter Mu is removed (see FIG. 15).

A vehicle C travels such that tires T pass through the left and right moving object cleaning devices 100B. The tire T passes on the mat for cleaning 1G while being guided by the guide portions 122. A length of the mat for cleaning 1G in the traveling direction of the tire T is longer than an outer circumference of the tire T. As a result, the tire T passes through the mat for cleaning 1G, and the cleaning of the entire circumference of the tire T is completed. The length of the mat for cleaning 1G is not limited to a length of one round of the outer circumference of the tire T and may be a length of a plurality of rounds such that the same place can be cleaned a plurality of times. Further, on the contrary, the length may be less than one round of the outer circumference of the tire T in consideration of the case where the installation location is restricted.

In the moving object cleaning device 100B according to the present embodiment, when the tire T (an example of an moving object) steps on the pump part 3 and presses the pump chamber wall 4G, the pump chamber wall 4G is deformed and crushed. When the pump chamber wall 4G is crushed, the liquid Lx (an example of a fluid) accommodated in the inside R is pushed out, passes through the ejection port 7g, and is ejected to the tire T that applies a pressing force. As a result, according to the moving object cleaning device 100B, it is possible to eject the liquid Lx using the pressing force received from the tire T, and it is possible to efficiently clean the moving object while saving energy.

In the moving object cleaning device 100B according to the present embodiment, the moving object to be cleaned is the tire T, and the pressing force applied to the mat for cleaning 1G is significantly different from that applied to the above shoe sole SL. However, it is possible to appropriately apply the mats for cleaning 1A to IF according to the above embodiments by using a material capable of giving durability or adjusting the dimensions such as increasing the thickness of the pump chamber wall 4G in the mat for cleaning 1G to clean the above shoe sole SL. In this case, the same actions and effects as those of the mats for cleaning 1A to IF according to the above embodiments are exhibited.

Although the mat for cleaning and the moving object cleaning device according to the present disclosure have been described with reference to the embodiments, the present disclosure is not limited to these embodiments and may be other embodiments. For example, it is also possible to apply the structural features of the mats for cleaning according to the above embodiments to mats for cleaning or moving object cleaning devices according to other embodiments.

### Reference Signs List

1A tolF Mat for cleaning
2 Mat part
2a Front surface
2b Back surface
3 Pump part
4A to 4F Pump chamber wall
5A Projection (extraneous matter removing part)
5D Extraneous matter removing mat (extraneous matter removing part)
5E Projection (extraneous matter removing part)
6 Bottom member
7 Pressing force receiving portion
7a to 7g Ejection port (fluid passing portion)
8 Frame member
42 Ceiling portion
43E Blockage prevention wall (pressing force receiving portion)
45 Peripheral wall portion (ceiling portion)
47 Top plate portion (ceiling portion)
100A, 100B Moving object cleaning device
110 Case (accommodation part)
121 Water tank (accommodation part)
Ax Air (fluid)
Lx Liquid (fluid)
SL Shoe sole (moving object)
T Tire (moving object)
Mu Extraneous matter
R Inside of pump chamber wall

## Claims

1. A mat for cleaning that removes extraneous matter adhering to a moving object, the mat for cleaning comprising:
a mat part having a front surface facing the moving object and a back surface opposite to the front surface;
a plurality of pump parts disposed on the front surface of the mat part, formed integrally with the mat part, and being deformable independently of each other; and
a bottom member in contact with the back surface of the mat part and capable of being detached from the mat part,
wherein the pump parts each include
a pump chamber wall that protrudes from the front surface of the mat part and comes into contact with the moving object to receive a pressing force directly from the moving object, and
a fluid passing portion provided in the pump chamber wall and allowing communication between an inside and an outside of the pump chamber wall,
wherein the inside of the pump chamber wall opens on a side of the back surface and is closed by the bottom member, and
wherein the pump chamber wall is deformed by receiving the pressing force from the moving object, and a fluid accommodated in the inside of the pump chamber wall passes through the fluid passing portion and is ejected to the moving object.

2. The mat for cleaning according to claim 1, wherein, among the plurality of pump chamber walls, only the pump chamber wall that receives the pressing force directly from the moving object is deformed.

3. The mat for cleaning according to claim 1 or 2,
wherein the pump chamber wall includes a ceiling portion and a pressing force receiving portion that is provided to protrude from a part of the ceiling portion and in which a passage communicating with the fluid passing portion provided in the ceiling portion is formed, and
wherein the pump chamber wall is deformed by receiving the pressing force from the moving object via the pressing force receiving portion, and the fluid accommodated in the inside of the pump chamber wall passes through the fluid passing portion and is ejected to the moving object.

4. The mat for cleaning according to any one of claims 1 to 3, further comprising an extraneous matter removing part disposed between the plurality of pump parts to interfere with the moving object and to remove the extraneous matter.

5. The mat for cleaning according to any one of claims 1 to 4,
wherein the fluid is air, and
wherein the air accommodated in the inside of the pump chamber wall passes through the fluid passing portion and is ejected to the moving object due to the deformation of the pump chamber wall.

6. A moving object cleaning device comprising:
the mat for cleaning according to any one of claims 1 to 5;
an accommodation part configured to accommodate the mat for cleaning; and
a liquid stored in the accommodation part as the fluid,
wherein the liquid accommodated in the inside of the pump chamber wall passes through the fluid passing portion and is ejected to the moving object due to the deformation of the pump chamber wall.

7. A mat for cleaning that removes extraneous matter adhering to a moving object by ejecting a fluid, the mat for cleaning comprising:
a mat part having a front surface facing the moving object and a back surface opposite to the front surface;
a plurality of pump chamber walls protruding from the front surface, accommodating the fluid in an inside, and being elastically deformable;
a fluid passing portion which is provided on the pump chamber wall and through which the fluid in the inside passes and is ejected to an outside due to elastic deformation of the pump chamber wall and a fluid on the outside is sucked into the inside due to restoration of the pump chamber wall; and
a bottom member in contact with the back surface of the mat part and capable of being detached from the mat part,
wherein the inside of the pump chamber wall opens on a side of the back surface and is closed by the bottom member, and
wherein the pump chamber wall comes into contact with the moving object to receive a pressing force directly from the moving object and is deformable independently of the other pump chamber wall with the pressing force.

8. A moving object cleaning device comprising:
the mat for cleaning according to claim 7;
an accommodation part configured to accommodate the mat for cleaning; and
a liquid stored in the accommodation unit as the fluid,
wherein the liquid accommodated in the inside of the pump chamber wall passes through the fluid passing portion and is ejected to the moving object due to the deformation of the pump chamber wall.
